# EUROPEAN PATENT APPLICATION

(11) **EP 1 473 935 A1**
(43) Date of publication of application: **03.11.2004**
(21) Application number: 03700470.2
(22) Date of filing: 08.01.2003
(51) Int. Cl.: H04N 5/91, H04N 5/92, H04N 5/93

(54) **INFORMATION PROCESSING APPARATUS AND METHOD**

(30) Priority: 04.02.2002 JP 2002026864
(71) Applicant: Sony Corporation, Tokyo 141-0001 (JP)
(72) Inventor: IKEDA, Kiyoshi, Shinagawa-ku, Tokyo 141-0001 (JP)
(74) Representative: DeVile, Jonathan Mark, Dr.
(86) International application number: PCT/JP2003/000053
(87) International publication number: WO 2003/067881

(57) **Abstract**

The present invention relates to an apparatus and a method for information processing that suppress disturbance occurring when a splice point of spliced stream data is reproduced. A DTS of a TS stream is generated by adding a counter value for one frame by an adder 57. A PTS is generated according to a type of the picture on the basis of the DTS. For an I-picture and a P-picture, the PTS is generated by adding a counter value for three frames to the DTS, whereas for a B-picture, the DTS is generated as the PTS. A PCR is generated by the adder 57 on the basis of the number of pictures in a period from detection of an immediately preceding PCR to detection of the present PCR, as a value resulting from adding a value obtained by multiplying the number of pictures by 3003 to an STC of the immediately preceding PCR. A data replacing unit 72 replaces original values with the generated DTS, PTS, and PCR, and then outputs the result.

## Description

### TECHNICAL FIELD

The present invention relates to an apparatus and a method for information processing, and particularly to an apparatus and a method for information processing that reduce disturbance of reproduced data occurring at the time of continuous reproduction of spliced stream data.

### BACKGROUND ART

Technology of recording and reproducing video and audio by an MPEG (Moving Picture Experts Group) 2 system is coming into general use. MPEG2 is one of video compression technologies, and is widely used for digital video cameras and the like.

In the video compression method of MPEG2, video data is converted into three types of coded pictures: an I- (Intra Coded) picture (coded data that can be decoded separately), a P- (Predictive Coded) picture (coded data that can be decoded from an I-picture or a P-picture temporally preceding the P-picture), and a B- (Bidirectionally Predictive Coded) picture (coded data that can be decoded from I-pictures or P-pictures temporally preceding and succeeding the B-picture). The coded pictures are arranged in predetermined order. Compression processing is thus performed. At the time of reproduction, these pictures are decoded according to characteristics of each of the pictures, and displayed in predetermined order.

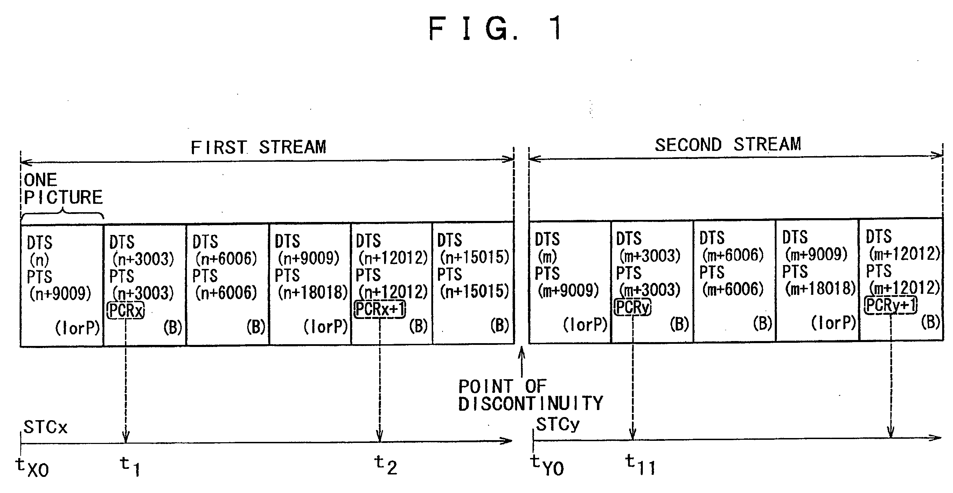

FIG. 1 conceptually shows a composition of stream data (TS: Transport Stream: one form of an MPEG2 stream used when transferred in an error-prone environment) recorded by the MPEG2 system. As described above, in data recorded by the MPEG2 system, not all pictures of I-pictures, P-pictures, and B-pictures are decoded in time series and reproduced without the order being changed; decoding timing and reproduction timing differ from each other depending on the type of the picture. Accordingly, in MPEG2, for each video frame in the case of video data (for each audio frame in the case of audio data), DTS (Decoding Time Stamp) indicating timing of decoding the data and PTS (Presentation Time Stamp) indicating timing of reproducing the data are set, as shown in FIG. 1.

Timing of DTS and PTS is time data corresponding to reference time of a recording apparatus generated in an STC (System Time Clock) provided in the recording apparatus. The STC is actually a counter value that cycles in about 26 hours. In a case of recording video data of an NTSC (National Television Standards Committee) system, a counter value for one frame is used as 3003 (3600 in a case of a PAL (Phase Alternating Line) system).

Thus, as shown in FIG. 1, for each picture in the figure, when a DTS (n) (the STC counter value is n) is set in a first picture, a next DTS is n + 3003, and DTSs as timing of consecutively decoding succeeding pictures are set to n + 6006, n + 9009, n + 12012, and n + 15015, indicating sequential reproduction of a first stream.

On the other hand, PTS is set on the basis of DTS, and is set differently depending on the type of the picture. When a cycle of I-pictures and P-pictures is three frames (when two B-picture frames are inserted consecutively between I-pictures or P-pictures and an I-picture or a P-picture appears in every third frame), for example, a PTS in an I-picture or a P-picture is a value obtained by adding a value for three frames to the DTS. Specifically, since the leftmost picture of the first stream in FIG. 1 is an I-picture or a P-picture, the PTS of the picture is n + 9009 (3003 × 3), whereas the DTS of the picture is n. Similarly, a third picture from the left in the figure, which is a B-picture, has a DTS of n + 6006 and a PTS of n + 6006. Further, since a fourth picture from the left is an I-picture or a P-picture, the PTS of the picture is n + 18018 (= n + 9009 + 9009), whereas the DTS of the picture is n + 9009. Since a fifth picture from the left is a B-picture, the PTS of the picture is n + 12012, while the DTS of the picture is n + 12012. Further, since a sixth picture from the left is also a B-picture, the PTS of the picture is n + 15015, while the DTS of the picture is n + 15015.

Incidentally, description below will be made of a case where both DTS and PTS are used. In practice, however, in a B-picture in MPEG2, only either one of DTS and PTS is required, and therefore DTS is not used as data but only PTS is used as data. In a case where there are no B-pictures, since an I-picture can be decoded separately and an I-picture or a P-picture required to decode a P-picture is already present, the pictures can be reproduced as they are in timing in which the pictures are decoded. Thus, also in this case, only PTS is used.

In addition, PCR (Program Clock Reference) is set as information indicating correspondence between STC as reference time and stream data. Specifically, since DTS and PTS are STC values in a recording apparatus (encoding apparatus) and therefore do not necessarily coincide with STC on a reproducing apparatus (decoding apparatus) side, PCR for correcting the STC on the decoding apparatus side is set in pictures of stream data at irregular intervals.

More specifically, in FIG. 1, a PCR is included in the third picture and the fifth picture from the left (PCRx and PCRx+1, respectively, in FIG. 1). The reproducing apparatus reads this information when processing the pictures, thereby recognizes that a time for processing the third picture from the left is a time t1, and corrects the STC at that point in time. Further, on the basis of the information of PCRx+1 included in the fifth picture from the left, the reproducing apparatus recognizes that a time for processing the fifth picture from the left is a time t2, and reproduces the stream data while correcting the STC.

The stream data recorded by the MPEG2 system is recorded and reproduced by processing as described above.

With the MPEG2 stream data recorded and reproduced by the method as described above, consideration will be given to for example a case where a second stream is recorded ("spliced") in other timing following the first stream, as shown in FIG. 1. In this case, since image pickup timing of the second stream is different from that of the first stream, DTS and PTS are set as shown in FIG. 1.

Specifically, m (≠ n) is set as a DTS of a leftmost picture (an I-picture or a P-picture) of the second stream, and m + 9009 is set as a PTS of the picture. Succeeding pictures are arranged from the left as a B-picture, a B-picture, an I-picture or a P-picture, and a B-picture, respectively. DTSs of the succeeding pictures are set as m + 3003, m + 6006, m + 9009, and m + 12012, respectively, and PTSs of the succeeding pictures are set as m + 3003, m + 6006, m + 9009, and m + 12012, respectively. Thus, while continuity of the DTSs and the PTSs is maintained within each of the first stream and the second stream, the DTSs and the PTSs are set in each stream independently of the other stream.

Setting STCx as STC for reference in the first stream and setting STCy as STC for reference in the second stream, as shown in FIG. 1, since PCR records time data of the STC at the time of image pickup, STCx and STCy have reference times tx0 and ty0 (times on the STC when recording is started) different from each other. Hence, continuity of PCRs for reference between the streams is not maintained, of course.

Thus, the DTSs and the PTSs are set in each of the first stream and the second stream without continuity between the first stream and the second stream. Therefore, when the first stream and the second stream are reproduced continuously, since continuity of the DTSs and the PTSs is not maintained around a point of discontinuity in FIG. 1, the STC is corrected from a state corresponding to STCx used in reproducing the first stream to a state corresponding to STCy. Hence, although the STC should be changed to the reference time of STCy at the time of change to the second stream, the STC remains in the state of STCx. Thus, until the STC is corrected to STCy, the DTSs and the PTSs of the second stream are processed referring to STCx in reproducing the spliced stream data. A disturbance consequently occurs at this time, such as freezing of reproduced video.

### DISCLOSURE OF THE INVENTION

The present invention has been made in view of the above, and it is an object of the present invention to maintain continuity of DTSs and PTSs and thereby suppress a disturbance occurring when continuously reproducing spliced stream data.

According to the present invention, there is provided an information processing apparatus characterized by including: first obtaining means for obtaining first time data of first stream data; second obtaining means for obtaining second time data of second stream data spliced to the first stream data; and time data converting means for converting the second time data into time data continuous with the first time data.

The stream data can be video data or audio data recorded by an MPEG2 system.

The first time data and the second time data can include decoding time stamp data, presentation time stamp data, or program clock reference data defined by MPEG2.

According to the present invention, there is provided an information processing method characterized by including: a first obtaining step for obtaining first time data of first stream data; a second obtaining step for obtaining second time data of second stream data spliced to the first stream data; and a time data converting step for converting the second time data into time data continuous with the first time data.

According to the present invention, there is provided a program on a program storing medium, the program characterized by including: a first obtaining control step for controlling obtaining first time data of first stream data; a second obtaining control step for controlling obtaining second time data of second stream data spliced to the first stream data; and a time data converting control step for controlling converting the second time data into time data continuous with the first time data.

According to the present invention, there is provided a program executed by a computer, the program characterized by including: a first obtaining control step for controlling obtaining first time data of first stream data; a second obtaining control step for controlling obtaining second time data of second stream data spliced to the first stream data; and a time data converting control step for controlling converting the second time data into time data continuous with the first time data.

The information processing apparatus and method, and the program according to the present invention obtain first time data of first stream data, obtain second time data of second stream data spliced to the first stream data, and convert the second time data into time data continuous with the first time data.

### BRIEF DESCRIPTION OF THE DRAWINGS

FIG. 1 is a diagram showing a composition of stream data recorded by a conventional recording apparatus;
FIG. 2 is a block diagram showing a configuration of an embodiment of a video recorder to which the present invention is applied;
FIG. 3 is a block diagram showing a configuration of a reproducing apparatus for reproducing stream data recorded on a recording medium by the video recorder of FIG. 2;
FIG. 4 is a block diagram showing a configuration of a time data converting unit in FIG. 2;
FIG. 5 is a flowchart of assistance in explaining time stamp conversion processing;
FIG. 6 is a diagram of assistance in explaining a composition of stream data converted by the time stamp conversion processing; and
FIG. 7 is a diagram of assistance in explaining a program storing medium.

### BEST MODE FOR CARRYING OUT THE INVENTION

FIG. 1 is a diagram showing a configuration of an embodiment of a video recorder according to the present invention.

A CCD (Charged Coupled Device) camera 11 includes an image pickup device formed by a CCD. The CCD camera 11 outputs a picked-up image as video data to an MPEG video encoder 12. The MPEG video encoder 12 encodes (compresses) the video data inputted thereto by the CCD camera 11 by an MPEG2 system, generates a video ES (Elementally Stream), and then outputs the video ES to a multiplexer 13.

A microphone 14 generates audio data, and then outputs the audio data to an MPEG audio encoder 15. The MPEG audio encoder 15 encodes (compresses) the audio data inputted thereto from the microphone 14 by an MPEG system, and then outputs the result as an audio ES to the multiplexer 13.

The multiplexer 13 multiplexes the MPEG2 video ES inputted thereto from the MPEG video encoder 12 and the audio ES inputted thereto from the MPEG audio encoder 15, thereby generates stream data formed by a TS (Transport Stream) as shown in FIG. 1, and then outputs the stream data to a time data converter 16. It is to be noted that FIG. 1 shows only information on video data for description reasons; in practice, however, the video ES and the audio ES are multiplexed to generate a TS in which video data and audio data are mixed with each other.

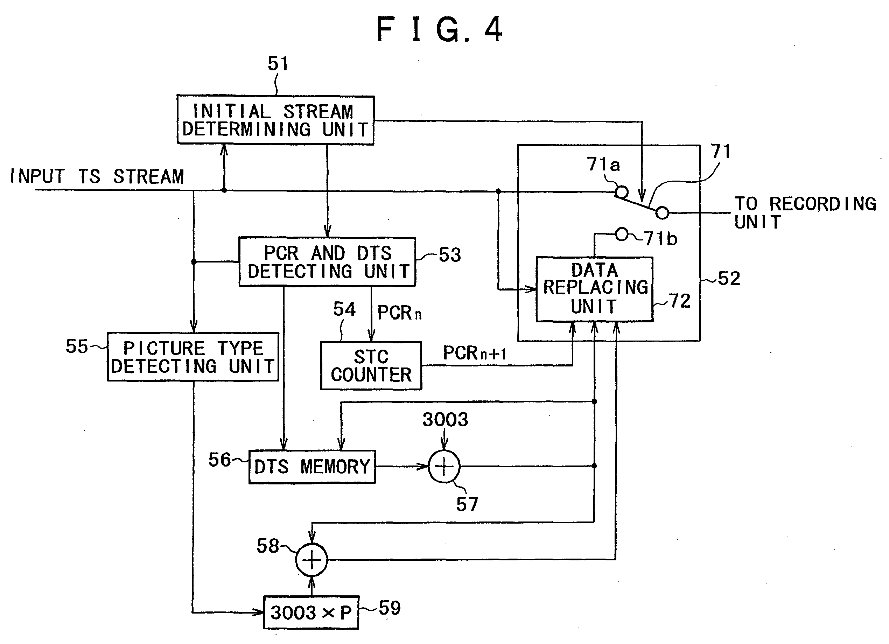

The time data converter 16 converts PTS, DTS, and PCR, which are time data of stream data (spliced stream data) recorded after first recorded stream data in the TS inputted from the multiplexer 13, on the basis of DTS, PTS, and PCR of stream data recorded before the spliced stream data, and then outputs the result to a recording unit 17. The time data converter 16 will be described later in detail with reference to FIG. 4.

The recording unit 17 records onto a recording medium 18 the stream data inputted from the time data converter 16, the stream data having the converted time data. Specifically, in a case where the recording medium is a video tape, for example, the recording unit 17 includes a magnetic head and the like, and records the stream data onto the recording medium 18 formed by the magnetic tape.

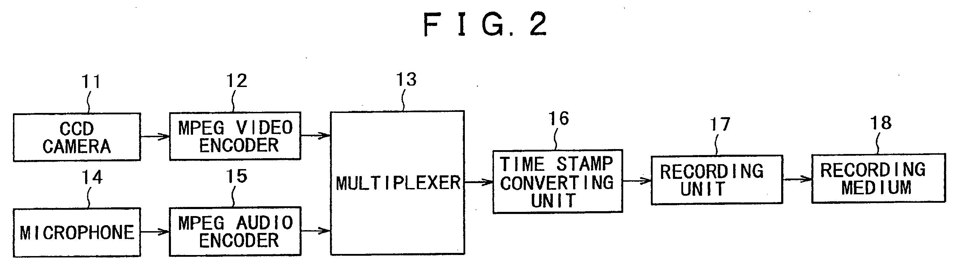

Operation of the video recorder of FIG. 2 will next be described.

The CCD camera 11 outputs picked-up image data to the MPEG video encoder 12, and the microphone 14 outputs audio data to the MPEG audio encoder 15. The MPEG video encoder 12 and the MPEG audio encoder 15 compress the image data and the audio data inputted to the MPEG video encoder 12 and the MPEG audio encoder 15, respectively, by the MPEG2 system, generate a video ES and an audio ES, and then output the video ES and the audio ES to the multiplexer 13.

The multiplexer 13 multiplexes the video ES and the audio ES inputted thereto from the MPEG video encoder 12 and the MPEG audio encoder 15, thereby generates stream data formed by a TS as shown in FIG. 1, and then outputs the stream data to the time data converter 16.

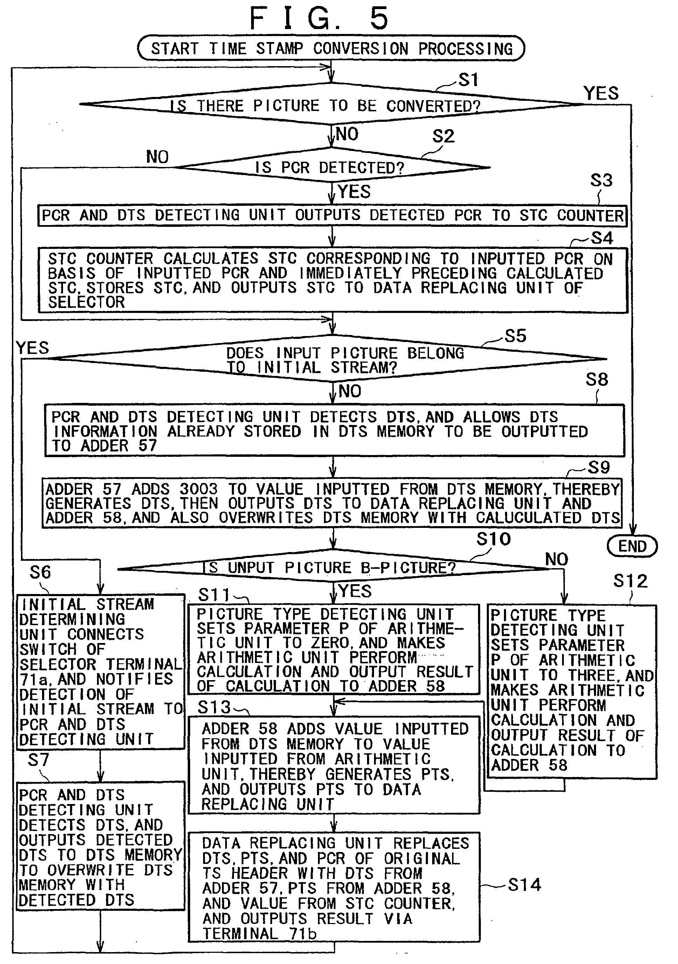

The time data converter 16 converts time data including DTS, PTS, and PCR of spliced stream data after stream data first recorded on the recording medium into a value continuous with stream data recorded immediately before the spliced stream data, and then outputs the result to the recording unit 17. Time stamp conversion processing of the time data converter 16 for converting the time data will be described later in detail with reference to a flowchart of FIG. 5.

The recording unit 17 records the stream data inputted from the time data converter 17 onto the recording medium 18.

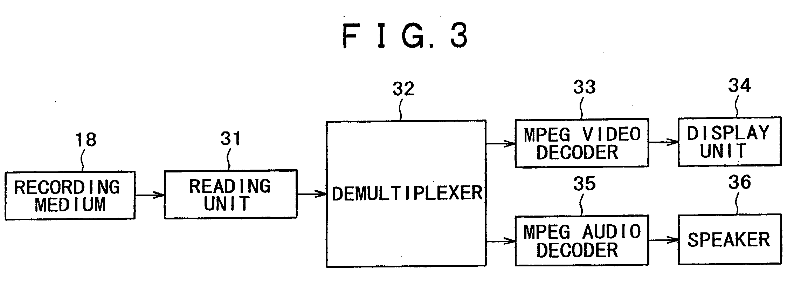

A reproducing apparatus for reproducing the stream data recorded on the recording medium 18 by the video recorder of FIG. 2 will next be described with reference to FIG. 3.

A reading unit 31 reads the stream data recorded on the recording medium 18, and then outputs the stream data as a TS to a demultiplexer 32. The demultiplexer 32 separates the video ES and the audio ES multiplexed in the TS inputted thereto, and then outputs the video ES and the audio ES to an MPEG video decoder 33 and an MPEG audio decoder 35, respectively.

The MPEG video decoder 33 decodes the video ES inputted thereto by the MPEG2 system, thereby generates the original video data, and then outputs the video data to a display unit 34. The MPEG video decoder 33 has an STC not shown in the figure. The MPEG video decoder 33 corrects the STC on the basis of PCR information of each picture frame included in the video ES, and effects decoding or output (display) in timing corresponding to a DTS or a PTS corresponding to each picture frame (hereinafter also referred to as a frame) on the basis of the STC. The display unit 34 includes a LCD (Liquid Crystal Display), a CRT (Cathode Ray Tube) or the like, and displays the video data inputted thereto from the MPEG video decoder 33.

The MPEG audio decoder 35 decodes the audio ES inputted thereto by the MPEG2 system, thereby generates the original audio data, and then outputs the audio data to a speaker 36. The MPEG audio decoder 35 has an STC not shown in the figure. The MPEG audio decoder 35 corrects the STC on the basis of PCR information of each audio frame included in the audio ES, and effects decoding or output to the speaker 36 in timing corresponding to a DTS or a PTS corresponding to each frame (audio frame) on the basis of the STC. The speaker 36 outputs sound on the basis of the audio data inputted thereto from the MPEG audio decoder 35.

Operation of the reproducing apparatus of FIG. 3 will next be described.

The reading unit 31 reads the stream data recorded on the recording medium 18, and then outputs the stream data as a TS to the demultiplexer 32. The demultiplexer 32 obtains the TS inputted thereto from the reading unit 31, separates the video ES and the audio ES multiplexed in the TS, and then outputs the video ES and the audio ES to the MPEG video decoder 33 and the MPEG audio decoder 35, respectively.

The MPEG video decoder 33 corrects the built-in STC on the basis of a PCR included in each picture frame (there are picture frames not including PCR) of the video ES inputted thereto from the demultiplexer 32. The MPEG video decoder 33 performs decoding processing by the MPEG2 system in timing of a DTS corresponding to the STC, thereby generates the original video data, and then outputs the video data in timing of a PTS to the display unit 34 for display. The MPEG audio decoder 35 corrects the DTS on the basis of a PCR of each audio frame (there are audio frames not including PCR) included in the audio ES inputted thereto. The MPEG audio decoder 35 performs decoding processing by the MPEG2 system in timing of a DTS corresponding to the DTS, thereby generates the original audio data, and then has the audio data outputted as sound from the speaker 36 in timing of a PTS.

A configuration of the time data converter 16 will next be described with reference to FIG. 4.

An initial stream determining unit 51 determines in timing in which a TS is inputted whether the inputted TS is stream data to be recorded first on the recording medium 18 (whether the inputted TS is the first stream shown in FIG. 1). The initial stream determining unit 51 outputs a result of the determination to a PCR and DTS detecting unit 53, and changes a switch 71 of a selector 52 to a terminal 71a or 71b on the basis of the result of the determination.

More specifically, the initial stream determining unit 51 reads data recorded on the recording medium 18 via the recording unit 17. When the initial stream determining unit 51 confirms that there is no stream data (that the present stream data is an initial stream), the initial stream determining unit 51 outputs a notification indicating that the present stream data is initial stream data to the PCR and DTS detecting unit 53. Also, when the present stream data is an initial stream, the initial stream determining unit 51 connects the switch 71 to the terminal 71a. Otherwise, the initial stream determining unit 51 connects the switch 71 to the terminal 71b.

The selector 52 connects the switch 71 to one of the terminals 71a and 71b. The selector 52 thereby selects either stream data including an initial stream (inputted stream data as it is) or stream data other than the initial stream in which time data including DTS, PTS, and PDR is changed. The selector 52 outputs the selected stream data to the recording unit 17.

A data replacing unit 72 replaces a DTS, a PTS, and a PCR included in a TS header of stream data of a stream inputted thereto other than the initial stream with a DTS generated by an adder 57, a PTS generated by an adder 58, and an STC value as a PCR generated by an STC counter 54. The data replacing unit 72 outputs the result to the recording unit 17 via the terminal 71b and the switch 71.

The PCR and DTS detecting unit 53 detects a PCR and a DTS (a PCR and a DTS assigned to a picture unit including a plurality of TS packets) from a TS header of each TS packet of the input TS. When the PCR and DTS detecting unit 53 receives the notification indicating the initial stream from the initial stream determining unit 51, the PCR and DTS detecting unit 53 instructs a DTS memory 56 to overwrite itself with the detected DTS and at the same time not to supply an output to the adder 57. When the PCR and DTS detecting unit 53 does not receive the notification indicating the initial stream from the initial stream determining unit 51, the PCR and DTS detecting unit 53 instructs the DTS memory 56 in timing of detection of a DTS to output a DTS stored in the DTS memory 56 at that point in time to the adder 57. When detecting a PCR, the PCR and DTS detecting unit 53 outputs, to the STC counter 54, information of the number of TS packets (the information may be the number of DTSs) detected from timing of detection of the present PCR to timing of detection of a PCR immediately preceding the present PCR.

Incidentally, the PCR is base time reference data for correcting STC generated by the STC counter. Because of an MPEG2 specification requiring that only at least one PCR be generated within 0.1 ms for accuracy of the STC, there are TS packets including a PCR and TS packets not including a PCR.

The STC counter 54 generates an STC corresponding to the present PCR on the basis of the present PCR and the number of TS packets inputted thereto from the PCR and DTS detecting unit 53 and the STC of the immediately preceding PCR stored in the STC counter 54. The STC counter 54 stores the STC by overwriting itself, and outputs the STC to the data replacing unit 72 of the selector 52.

A picture determining unit 55 determines whether a picture including input TS packets (a picture including a plurality of TS packets) is an I-picture, a P-picture, or a B-picture. On the basis of a result of the determination, when the picture is an I-picture or a P-picture, the picture determining unit 55 sets a parameter p of an arithmetic unit 59 to three so that the arithmetic unit 59 calculates 3003 × p (p = 3) and outputs the result to the adder 58. When the picture of the input TS packets is a B-picture, the picture determining unit 55 sets the parameter p of the arithmetic unit 59 to zero so that the arithmetic unit 59 outputs zero (= 3003 × 0) to the adder 58. It is to be noted that the parameter p is a value changing according to a cycle of I-pictures and P-pictures. In this case, the cycle is three frames (two B-pictures are inserted consecutively between I-pictures or P-pictures), and therefore p is set to three. When the cycle is two frames (one B-picture is inserted consecutively between I-pictures or P-pictures), for example, p is set to two. For other values, the parameter p is changed in a similar manner.

The DTS memory 56 is controlled by the PCR and DTS detecting unit 53. The DTS memory 56 is sequentially overwritten with a DTS belonging to the initial stream, and thereby stores the DTS. For a DTS of another stream, in timing of detection of the DTS, the DTS memory 56 outputs an immediately preceding DTS stored therein to the adder 57, and overwrites itself with a DTS value obtained by adding 3003 to the immediately preceding DTS by the adder 57 and thereby stores the DTS value by overwriting.

The adder 57 adds 3003, which is an STC counter value for one frame, to the DTS inputted thereto from the DTS memory 58, and then outputs the result to the DTS memory 56, the data replacing unit 72, and the adder 58. The adder 58 adds together the DTS value inputted thereto from the adder 57 and a value inputted thereto from the arithmetic unit 59. The adder 58 thereby generates a PTS, and then outputs the PTS to the data replacing unit 72.

Time stamp conversion processing of the time stamp converting unit 16 will next be described with reference to a flowchart of FIG. 5.

At a step S1, the PCR and DTS detecting unit 53 determines whether there is a picture having time stamps to be converted. When there is a picture having time stamps to be converted, the processing proceeds to a step S2.

At the step S2, the PCR and DTS detecting unit 53 determines whether a PCR is detected. When the PCR and DTS detecting unit 53 determines that a PCR is detected, the processing proceeds to a step S3.

At the step S3, together with the detected PCR, the PCR and DTS detecting unit 53 outputs the number of pictures occurring in a period from detection of an immediately preceding PCR to detection of the present PCR to the STC counter 54.

At a step S4, the STC counter 54 calculates an STC corresponding to the PCR inputted thereto on the basis of the inputted PCR and an immediately preceding calculated STC. The STC counter 54 stores the STC, and outputs the STC to the data replacing unit 72. More specifically, the STC counter 54 calculates an STC as the present PCR corresponding to the number of pictures in the period from the detection of the immediately preceding PCR to the detection of the present PCR, and then outputs the STC to the data replacing unit 72. The STC counter 54 sequentially repeats this processing. As a result, the PCR recorded on the recording medium 18 is a value based on an STC set as a PCR of a first picture of the initial stream (a value set as a time continuous from the STC as the PCR of the first picture of the initial stream).

Incidentally, when no PCR is detected at the step S2, the processing at the steps S3 and S4 is skipped, and the processing proceeds to a step S5.

At the step S5, the initial stream detecting unit 51 determines whether an input picture belongs to the initial stream. When the initial stream detecting unit 51 determines that the input picture belongs to the initial stream, for example, the processing proceeds to a step S6.

At the step S6, the initial stream determining unit 51 connects the switch 71 of the selector 52 to the terminal 71a, and notifies detection of the initial stream to the PCR and DTS detecting unit 53.

At a step S7, the PCR and DTS detecting unit 53 detects a DTS from the input picture, and then outputs the DTS to the DTS memory 56 to overwrite the DTS memory 56 with the DTS and thereby store the DTS in the DTS memory 56. The PCR and DTS detecting unit 53 also prohibits the DTS memory 56 from supplying an output to the adder 57. The processing returns to the step S1.

That is, the DTS, PTS, and PCR of the initial stream are set on the basis of the PCR serving as a reference therefor, and are therefore outputted as they are to the recording unit 17 by the processing of the steps S1 to S7 without being converted.

When it is determined at the step S5 that the input picture does not belong to the initial stream, the processing proceeds to a step S8.

At the step S8, in timing of detection of a DTS, the PCR and DTS detecting unit 53 allows a DTS already stored in the DTS memory 56 to be outputted to the adder 57.

At a step S9, the adder 57 adds 3003 (a DTS value for one frame) to the immediately preceding DTS value inputted thereto from the DTS memory 56, and thereby generates a present DTS. The adder 57 then outputs the present DTS to the data replacing unit 72 and the adder 58, and also overwrites the DTS memory 56 with the generated DTS to store the DTS in the DTS memory 56. That is, when stream data other than the initial stream is first detected, DTS information of a last picture of the initial stream is stored in the DTS memory 56. Therefore a consecutive DTS is generated by sequentially adding an STC counter value of 3003 for one frame to a DTS of a picture included in a stream after the initial stream.

At a step S10, the picture type determining unit 55 determines whether the input picture is a B-picture. When the picture type determining unit 55 determines that the input picture is a B-picture, the processing proceeds to a step S11.

At the step S11, the picture type determining unit 55 sets the parameter p of the arithmetic unit 59 to zero so that the arithmetic unit 59 calculates 3003 × 0 and outputs a result of the calculation to the adder 58. The processing proceeds to a step S13.

When the picture type determining unit 55 determines at the step S10 that the input picture is not a B-picture, that is, that the input picture is an I-picture or a P-picture, the processing proceeds to a step S12.

At the step S12, the picture type determining unit 55 sets the parameter p of the arithmetic unit 59 to three so that the arithmetic unit 59 calculates 3003 × 3 and outputs a result of the calculation to the adder 58. The processing proceeds to the step S13.

At the step S13, the adder 58 adds a value inputted thereto from the arithmetic unit 59 to the DTS inputted thereto from the adder 57. The adder 58 thereby generates a PTS, and then outputs the PTS to the data replacing unit 72.

Thus, the type of the picture is determined at the step S10, and according to a result of the determination, the value to be added to the DTS required in generating the PTS is determined and outputted to the adder 58 at the step S11 or S12. By the processing of the step S13, for a B-picture, the DTS value itself is outputted as the PTS to the data replacing unit 72, and for an I-picture or a P-picture, 3003 × 3, which is an STC counter value for three frames, is added to the DTS value and the result is outputted as the PTS to the data replacing unit 72.

At a step S14, the data replacing unit 72 replaces the DTS, PTS, and PCR included in a TS header of an input TS packet with the DTS inputted thereto from the adder 57, the PTS inputted thereto from the adder 58, and the PCR inputted thereto from the STC counter 54. The data replacing unit 72 then outputs the result to the recording unit 17 via the terminal 71b and the switch 71.

The processing of the steps S1 to S14 is repeated until it is determined at the step S1 that there is no TS packet to be converted. When it is determined that there is no TS packet to be converted, the processing is ended.

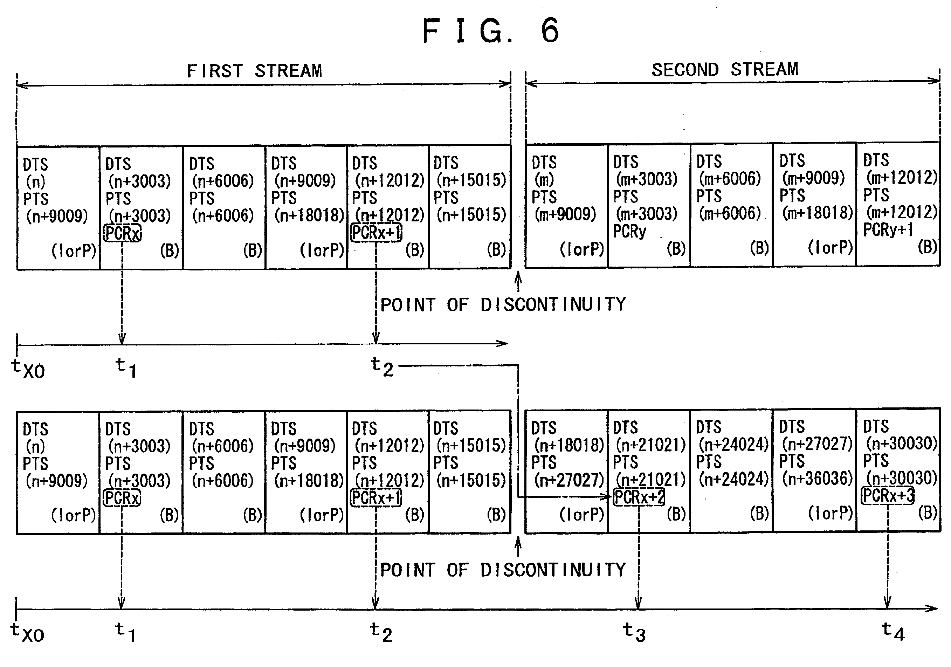

As a result of the time stamp conversion processing as described above, when stream data as indicated by A in FIG. 6 is inputted, for example, the stream data is converted into stream data as indicated by B in FIG. 6. Specifically, as to a DTS and a PTS of each TS packet of an input first stream as indicated by A in FIG. 6 before the conversion, a first TS packet from the left in the figure, which packet represents an I-picture or a P-picture, has a DTS of n and a PTS of n + 9009. A succeeding TS packet, which represents a B-picture, has a DTS of n + 3003 and a PTS of n + 3003. Further, a third TS packet from the left in the figure, which packet also represents a B-picture, has a DTS of n + 6006 and a PTS of n + 6006. The third TS packet further includes a PCRx. A fourth TS packet from the left in the figure, which packet represents an I-picture or a P-picture, has a DTS of n + 9009 and a PTS of n + 18018. A fifth TS packet from the left in the figure, which packet represents a B-picture, has a DTS of n + 12012 and a PTS of n + 12012, and includes a PCRx+1. Further, a sixth TS packet from the left in the figure, which packet represents a B-picture, has a DTS of n + 15015 and a PTS of n + 15015.

Further, as to a DTS and a PTS of each TS packet of an input second stream as indicated by A in FIG. 6 before the conversion, a first TS packet from the left in the figure, which packet represents an I-picture or a P-picture, has a DTS of m and a PTS of m + 9009. A succeeding TS packet, which represents a B-picture, has a DTS of m + 3003 and a PTS of m + 3003, and further includes a PCRy. Further, a third TS packet from the left in the figure, which packet also represents a B-picture, has a DTS of m + 6006 and a PTS of m + 6006. A fourth TS packet from the left in the figure, which packet represents an I-picture or a P-picture, has a DTS of n + 9009 and a PTS of n + 18018. A fifth TS packet from the left in the figure, which packet represents an I-picture or a P-picture, has a DTS of n + 12012 and a PTS of n + 12012, and includes a PCRy+1. Incidentally, the arrangement of the DTSs, PTSs, and PCRs is the same as in FIG. 1.

The stream data of the first stream indicated by A in FIG. 6, for which the switch 71 is connected to the terminal 71a, is outputted as it is to the recording unit 17 by the processing of the steps S1 to S7 without the DTSs, PTSs, and PCRs of the stream data being converted, as indicated by B in FIG. 6.

The new DTSs of the stream data of the second stream indicated by A in FIG. 6, that is, the stream data after a point of discontinuity with the first stream are generated by sequentially adding a counter value of 3003 for one frame from a start of the second stream independently of the stream by the adder 57. Thus, as indicated by B in FIG. 6, the DTS of the first TS packet of the second stream after the point of discontinuity is n + 18018, obtained by adding a value of 3003 for one frame to n + 15015, or the DTS value of the last TS packet of the first stream. The values of the succeeding TS packets are converted into n + 21021, n + 24024, n + 27027, and n + 30030 in that order.

The PTS of an I-picture or a P-picture is generated as a value obtained by adding 3003 × 3, or a value for three frames, to the generated DTS of the I-picture or the P-picture. The PTS of a B-picture is outputted as the same value as the DTS of the B-picture. Thus, as indicated by B in FIG. 6, as against the DTS values converted as described above, the PTSs of the second stream are converted, from the first TS packet of the second stream, into n + 27027, n + 21021, n + 24024, n + 36036, and n + 30030.

Further, a PCR is set as a value resulting from adding a value obtained by multiplying the number of frame pictures in a period to the detection of the present PCR by a counter value of 3003 to an immediately preceding STC. Hence, for PCRy, the first in the second stream, a value resulting from adding to PCRx+1, or the last in the first stream, a value obtained by multiplying the number of frame pictures occurring in a period between PCRx+1 and PCRy by 3003, that is, a counter value for three frames in the case of B in FIG. 6 is set as PCRx+2. Similarly, PCRx+3 is set as a value resulting from adding a value obtained by multiplying the number of frame pictures between PCRx+2 and PCRx+3 by 3003 (= 3003 × 3) to the counter value of PCRx+2. Thus, when an STC obtained on the basis of PCRx is a time t1, an STC obtained on the basis of PCRx+1 is a time t2, an STC obtained on the basis of PCRx+2 is a time t3, and an STC obtained on the basis of PCRx+3 is a time t4, the times t1 to t4 have the same reference time (an STC counting start time is a common reference time tx0). Also the DTSs are consecutively set independently of the first stream and the second stream. Therefore, even when a reproducing apparatus (decoding apparatus) performs continuous reproduction straddling the first stream and the second stream, the reproducing apparatus can perform reproduction without correcting STC in timing of change of the streams. As a result, disturbance in display such as freezing that tends to occur at a portion where spliced streams are changed is suppressed.

It is to be noted that while in the above example, the time data converting unit 16 is provided in the video recorder, a separate device of only the time data converting unit 16 may be formed so that when stream data reproduced from a reproducing apparatus is recorded or "dubbed" by another recording apparatus, for example, the time data converting unit 16 converts only time data (such as DTS, PTS, and PCR) of the stream data outputted from the reproducing apparatus and then outputs the result to the recording apparatus for recording, to thereby suppress disturbance in display at the time of continuous reproduction of spliced stream data in the newly recorded (dubbed) stream data.

According to the above, it is possible to suppress disturbance in display occurring when reproducing a portion where spliced streams are changed.

The series of processing steps described above can be carried out not only by hardware but also by software. When the series of processing steps is to be carried out by software, a program forming the software is installed from a program storing medium onto a computer that is incorporated in dedicated hardware, or a general-purpose personal computer or the like that can perform various functions by installing various programs thereon, for example.

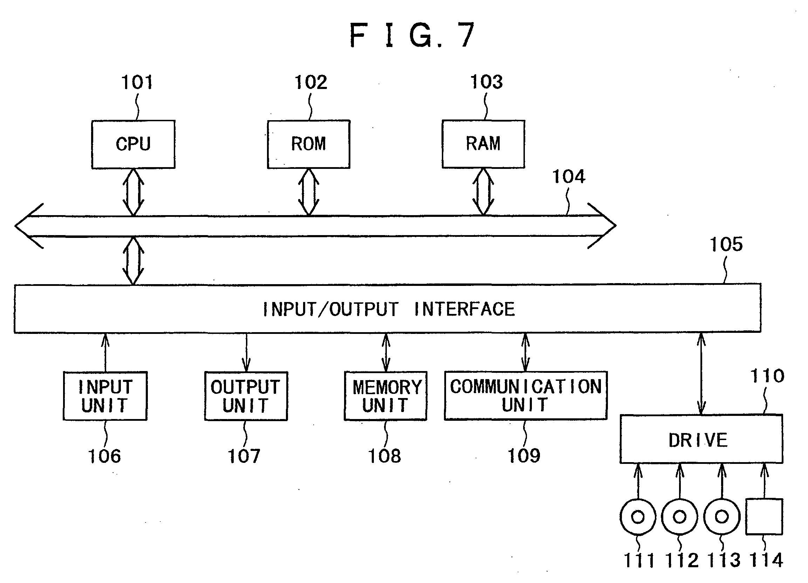

FIG. 7 shows a configuration of an embodiment of a personal computer when the video recorder is realized by software. A CPU 101 of the personal computer controls the entire operation of the personal computer. When a command is inputted from an input unit 106 including a keyboard, a mouse and the like from a user via a bus 104 and an input/output interface 105, the CPU 101 executes a program stored in a ROM (Read Only Memory) 102 in response to the command. Alternatively, the CPU 101 loads into a RAM (Random Access Memory) 103 a program that has been read from a magnetic disk 111, an optical disk 112, a magneto-optical disk 113, or a semiconductor memory 114 connected to a drive 110 and which has been installed in a memory unit 108, and then the CPU 101 executes the program. The functions of the above-described image processing apparatus 1 are thereby realized by software. Further, the CPU 101 controls a communication unit 109 to communicate and exchange data with the outside.

As shown in FIG. 7, the program storing medium having the program recorded thereon is not only formed by packaged media distributed to users to provide the program separately from the computer, the packaged media being formed by the magnetic disk 111 (including flexible disks), the optical disk 112 (including CD-ROM (Compact Disk-Read Only Memory) and DVD (Digital Versatile Disk)), the magneto-optical disk 113 (including MD (Mini-Disc)), the semiconductor memory 114 or the like which has the program recorded thereon, but also formed by the ROM 102, a hard disk included in the memory unit 108 or the like which has the program recorded thereon and is provided to the user in a state of being preincorporated in the computer.

It is to be noted that in the present specification, the steps describing the program recorded on the program storing medium include not only processing carried out in time series in the described order but also processing carried out in parallel or individually and not necessarily in time series.

### INDUSTRIAL APPLICABILITY

An apparatus and a method for information processing, and a program according to the present invention obtain first time data of first stream data, obtain second time data of second stream data spliced to the first stream data, and convert the second time data into time data continuous with the first time data. It is therefore possible to suppress disturbance in display occurring when reproducing a portion where spliced streams are changed.

## Claims

1. An information processing apparatus **characterized by** comprising:
first obtaining means for obtaining first time data of first stream data;
second obtaining means for obtaining second time data of second stream data spliced to said first stream data; and
time data converting means for converting said second time data into time data continuous with said first time data.

2. An information processing apparatus as claimed in claim 1, **characterized in that**:
said stream data is video data or audio data recorded by an MPEG2 system.

3. An information processing apparatus as claimed in claim 2, **characterized in that**:
said first time data and said second time data include decoding time stamp data, presentation time stamp data, or program clock reference data defined by MPEG2.

4. An information processing method **characterized by** comprising:
a first obtaining step for obtaining first time data of first stream data;
a second obtaining step for obtaining second time data of second stream data spliced to said first stream data; and
a time data converting step for converting said second time data into time data continuous with said first time data.

5. A program storing medium on which a computer readable program is stored, said program **characterized by** comprising:
a first obtaining control step for controlling obtaining first time data of first stream data;
a second obtaining control step for controlling obtaining second time data of second stream data spliced to said first stream data; and
a time data converting control step for controlling converting said second time data into time data continuous with said first time data.

6. A program executed by a computer, said program **characterized by** comprising:
a first obtaining control step for controlling obtaining first time data of first stream data;
a second obtaining control step for controlling obtaining second time data of second stream data spliced to said first stream data; and
a time data converting control step for controlling converting said second time data into time data continuous with said first time data.
